(19) Europäisches Patentamt
European Patent Office
Office européen des brevets

(11) Veröffentlichungsnummer: **0 416 570 A2**

(12) # EUROPÄISCHE PATENTANMELDUNG

(21) Anmeldenummer: **90117050.6**

(22) Anmeldetag: **05.09.90**

(51) Int. Cl.[5]: **C08G 61/12**, H01B 1/12

(30) Priorität: **07.09.89 DE 3929691**

(43) Veröffentlichungstag der Anmeldung:
**13.03.91 Patentblatt 91/11**

(84) Benannte Vertragsstaaten:
**BE CH DE FR GB IT LI NL**

(71) Anmelder: **HOECHST AKTIENGESELLSCHAFT**
**Postfach 80 03 20**
**W-6230 Frankfurt am Main 80(DE)**

(72) Erfinder: **Feldhues, Michael, Dr.**
**Im Weiber 18**
**W-6232 Bad Soden am Taunus(DE)**
Erfinder: **Pampus, Karl, Dr.**
**Parkstrasse 14**
**W-6233 Kelkheim/Taunus(DE)**

(54) **Elektrochemisches Verfahren zur Herstellung von elektrisch leitenden Poly(alkoxythiophenen)unter Zusatz von Brönsted-Säuren.**

(57) Als elektrisch leitende Polymere sind Poly(alkoxythiophene) durch ihre hohe Stabilität gegenüber Luft und Wasser und durch ihre gute Temperaturbeständigkeit von großem Interesse.

Zur Herstellung solcher Polymere im technischen Maßstab ist ein elektrochemisches Verfahren zur Herstellung von elektrisch leitenden Poly(alkoxythiophenen) geeignet, in dem die für den Kathodenprozeß benötigten Protonen durch Zugabe von Brönsted-Säuren zu Leitsalz und Elektrolytlösemittel zur Verfügung stehen. Die Gegenionen im dotierten Polymer stammen aus dem Leitsalz, so daß die Eigenschaften des Polymers weitgehend unabhängig von der Protonenquelle sind.

EP 0 416 570 A2

# ELEKTROCHEMISCHES VERFAHREN ZUR HERSTELLUNG VON ELEKTRISCH LEITENDEN POLY(ALKOXYTHIOPHENEN) UNTER ZUSATZ VON BRÖNSTED-SÄUREN

Die Erfindung betrifft ein verbessertes Verfahren zur elektrochemischen Herstellung von elektrisch leitenden Poly(alkoxythiophenen), das Anforderungen für eine Produktion im technischen Maßstab berücksichtigt.

Poly(alkoxythiophene) sind unter den elektrisch leitenden Polymeren von besonderem Interesse, da sie hohe Stabilität gegenüber Luft und Wasser und eine gute Temperaturbeständigkeit besitzen. Außerdem sind unter den Poly(alkoxythiophenen) eine Reihe von Vertretern, die im dotierten Zustand löslich sind und damit leitfähige Beschichtungen auf unterschiedlichen Substraten ermöglichen.

Die elektrochemische anodische Oxidation von Alkoxythiophenen ist eine bekannte Methode zur Herstellung von elektrisch leitenden Poly(alkoxythiophenen) (vgl. EP-A 257 573). Allerdings ist dem Kathodenprozeß, der bei Elektrolysen mit steigendem Umsatz zunehmende Bedeutung gewinnt, bisher wenig Aufmerksamkeit geschenkt worden. Außerdem sind die als Leitsalze bevorzugt verwendeten Tetraalkylammoniumsalze relativ teuer und können nicht vollständig zurückisoliert werden, da ein Teil während der Elektrolyse abgebaut wird.

In einer laufenden elektrochemischen Zelle finden an der Anode und an der Kathode unterschiedliche elektrochemische Reaktionen zur gleichen Zeit statt. So reagiert beispielsweise bei der elektrochemischen Polymerisation von Thiophen an der Anode monomeres Thiophen unter Abspaltung von zwei Protonen pro Monomereinheit sukzessiv zu Polythiophen, während an der Kathode üblicherweise Protonen zu Wasserstoff reduziert werden. Während der anodischen Polymerisation von Thiophen wird das gebildete Polythiophen zusätzlich noch an der Anode zum dotierten Polythiophen weiteroxidiert, wobei im allgemeinen auf je drei bis fünf Monomereinheiten eine positive Ladung entfällt. Die Stöchiometrie der Einzelreaktionen sieht dabei folgendermaßen aus:

**Anode:**

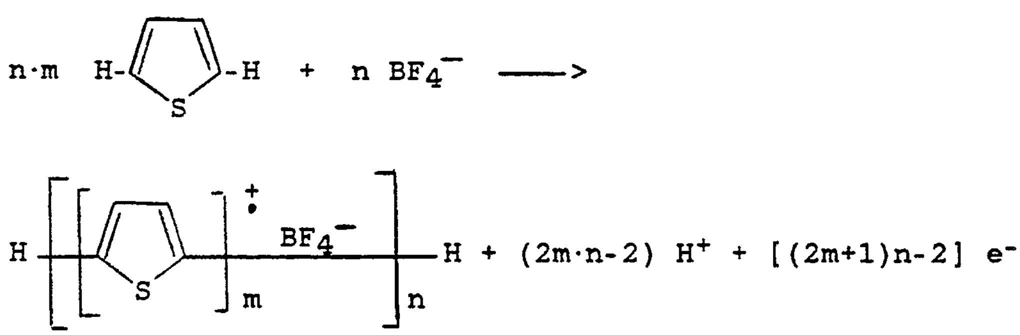

**Kathode:**

$$2\ H^+ + 2\ e^- \longrightarrow H_2$$

Für jedes Elektron, das dem monomeren oder polymeren Thiophen entzogen wird und in die Anode fließt, muß ein Elektron aus der Kathode austreten und kann dort ein Proton entladen. Aus der Stöchiometrie der Anodenreaktion geht hervor, daß genau n Elektronen mehr entstehen als Protonen. Dies führt zwangsläufig dazu, daß an der Kathode nicht genügend Protonen zum Entladen zur Verfügung stehen. Insbesondere bei präparativen Elektrolysen mit hohem Umsatz unter konstantem Strom verursacht dies einen Spannungsanstieg, der zu unkontrollierbaren Reaktionen mit Leitsalz und Lösemittel führt, die Selektivität und Ausbeute verringern und infolge von Abbauprodukten aus unerwünschten Kathodenprozessen die Aufarbeitung des Elektrolyten erschweren. Das Ansteigen des pH-Wertes während der Elektrolyse macht sich besonders störend bemerkbar, wenn als Leitsalze die preiswerteren Alkalimetallsalze verwendet werden, da sich dann auf der Kathode ein störender Belag abscheidet.

Ein Anstieg des pH-Wertes im Kathodenraum tritt in besonderem Maße dann auf, wenn der Transport der anodisch gebildeten Protonen zur Kathode behindert oder gänzlich unterdrückt wird, z. B. bei

Verwendung von Diaphragmen und Ionenaustauschermembranen.

Wasser, das als Protonenquelle prinzipiell in Frage kommt, kann zwar bei der elektrochemischen Polymerisation von Pyrrol vorteilhaft eingesetzt werden (vgl. J. Electroanal. Chem. 206 , 139 (1986)), im Falle der elektrochemischen Polymerisation von Thiophen führt die Zugabe von Wasser jedoch zu einem Qualitätsrückgang, da infolge des im Vergleich zu Pyrrol wesentlich höheren Oxidationspotentials von Thiophen und seinen Derivaten die anodisch gebildeten Radikalkationen mit Wasser reagieren können und isolierende Anodenbeläge entstehen (vgl. J. Electroanal. Chem. 206 , 147 (1986)).

Die Polymerisation von Thiophen in Gegenwart von Schwefelsäure, die als "Leitsalz" dient, aber auch Protonen zur Verfügung stellen kann, liefert nur bei tiefen Temperaturen ein brauchbares Ergebnis (vgl. Synthetic Metals 6 , 69 (1983)). Der beschriebene Elektrolyt aus Schwefelsäure und Dimethylsulfat ist für die Herstellung von Poly(alkoxythiophenen) nicht geeignet, da er bei Alkoxythiophenen Etherspaltung und alkylierende Vernetzung verursacht.

Es bestand daher die Aufgabe, ein für eine technische Produktion geeignetes elektrochemisches Verfahren zur Herstellung von elektrisch leitenden Poly(alkoxythiophenen) zu entwickeln, in dem die für den Kathodenprozeß benötigten Protonen zur Verfügung stehen, ohne daß die Monomere bzw. Polymere oder der Verlauf der Elektrolyse negativ beeinflußt werden.

Es wurde gefunden, daß Brönsted-Säuren mit bestimmten $pK_s$- Werten, die zum gewünschten Leitsalz und Elektrolyt-Lösemittel hinzu addiert werden, die zusätzlich benötigten Protonen für die kathodische Wasserstoffentwicklung zur Verfügung stellen, ohne Monomere, Polymer oder den Verlauf der Elektrolyse negativ zu beeinflussen. Überraschenderweise können sogar wasserhaltige Zusätze von Brönsted-Säuren erfolgreich eingesetzt werden.

Die vorliegende Erfindung betrifft ein Verfahren zur Herstellung eines elektrisch leitenden Poly(alkoxythiophens) in der dotierten (oxidierten) Form durch elektrochemische anodische Polymerisation von Verbindungen der Formel (I)

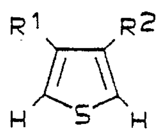

(I),

worin

$R^1$ eine geradkettige oder verzweigte $C_1$-$C_{30}$-Alkoxygruppe oder $-O(CH_2CH_2\ O)_nCH_3$ mit $n = 1$ bis 4 und

$R^2$ ein Wasserstoffatom, eine $C_1$-$C_{12}$-Alkylgruppe, eine $C_1$-$C_{30}$-Alkoxygruppe oder $-O(CH_2CH_2O)_nCH_3$ mit $n = 1$ bis 4 darstellen oder,

$R^1$ und $R^2$ zusammen den Rest $-O(CH_2)_mCH_2-$ oder $-O(CH_2)_mO-$mit $m = 1$ bis 12 bilden,

oder Verbindungen der Formel (II)

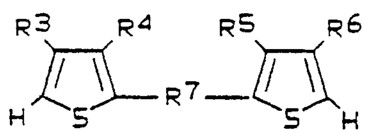

(II),

worin

wenigstens einer der Reste $R^3$, $R^4$, $R^5$ oder $R^6$ eine geradkettige oder verzweigte $C_1$-$C_{30}$-Alkoxygruppe $-O(CH_2CH_2O)_nCH_3$ mit $n = 1$ bis 4 darstellt und die übrigen der Reste $R^3$, $R^4$, $R^5$, $R^6$ ein Wasserstoffatom, eine $C_1$-$C_{12}$-Alkylgruppe oder eine $C_1$-$C_{30}$-Alkoxygruppe darstellen und

$R^7$ eine Arylengruppe, eine Heteroarylengruppe oder ein konjugiertes System der Formel $(CH=CH)_p$, worin p null, 1, 2 oder 3 ist, bedeutet oder

$R^3$, $R^4$, $R^5$, $R^6$ unabhängig voneinander ein Wasserstoffatom, eine $C_1$-$C_{12}$-Alkylgruppe oder eine $C_1$-$C_{30}$-Alkoxygruppe darstellen und

$R^7$ einen Rest der Formel (III) darstellt

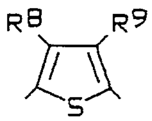

(III),

worin
$R^8$ eine geradkettige oder verzweigte $C_1$-$C_{30}$-Alkoxygruppe oder $O(CH_2CH_2O)_nCH_3$ mit n = 1 bis 4 und
$R^9$ ein Wasserstoffatom, eine $C_1$-$C_{12}$-Alkylgruppe oder eine $C_1$-$C_{30}$-Alkoxygruppe darstellen,
gegebenenfalls zusammen mit einem oder mehreren Comonomeren der Formel (IV)

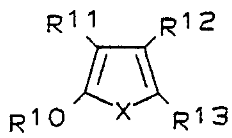

(IV),

worin
$R^{11}$ und $R^{12}$ unabhängig voneinander ein Wasserstoffatom, ein Halogenatom, eine $C_1$-$C_{12}$-Alkyl-, Alkoxyalkyl-, Arylmethyl- oder Arylgruppe bedeuten oder zusammen mit den sie verbindenden C-Atomen einen aromatischen Ring bilden,
$R^{10}$ und $R^{13}$ unabhängig voneinander ein Wasserstoffatom bedeuten oder $R^{10}$ zusammen mit $R^{11}$ und den sie verbindenden C-Atomen oder $R^{12}$ zusammen mit $R^{13}$ und den sie verbindenden C-Atomen jeweils, einen aromatischen Ring bilden,
X ein Sauerstoffatom, ein Schwefelatom, eine NH-Gruppe, eine N-Alkylgruppe oder eine N-Arylgruppe bedeutet, oder zusammen mit einem Comonomeren der Formel (V)

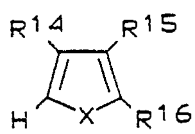

(V),

worin
$R^{14}$ und $R^{15}$ unabhängig voneinander Ein Wasserstoffatom, ein Halogenatom, eine $C_1$-$C_{12}$-Alkylgruppe, eine $C_1$-$C_{30}$-Alkoxygruppe oder eine $C_1$-$C_4$-Acylaminogruppe,
$R^{16}$ ein Halogenatom, eine $C_1$-$C_{12}$-Alkylgruppe, eine $C_1$-$C_{30}$-Alkoxygruppe oder eine $C_1$-$C_4$-Acylaminogruppe bedeuten und
X die oben angegebene Bedeutung hat,
in einem Elektrolyt-Lösemittel in Gegenwart eines Leitsalzes und zusätzlich in Gegenwart einer Protonenquelle in Form von mindestens einer monomeren oder polymeren anorganischen oder organischen Brönsted-Säure mit einem $pK_s$-Wert von -1,75 bis 5 oder einer Brönsted-Säure mit einem $pK_s$-wert kleiner als -1,74 zusammen mit einer mindestens äquimolaren Menge einer Brönsted-Base, deren konjugate Säure einen $pK_s$-Wert von -1,75 bis 5 hat.

Das erfindungsgemäße Verfahren beschreibt die vorteilhafte Herstellung von dotierten Poly(alkoxythiophenen) von Verbindungen der Formel (I)

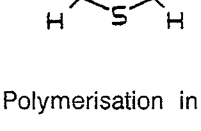

(I)

durch elektrochemische Polymerisation in Gegenwart eines Elektrolyt-Lösemittels, eines Leitsalzes und einer Brönsted-Säure.

$R^1$ ist eine geradkettige oder verzweigte $C_1$-$C_{30}$-Alkoxy-, vorzugsweise $C_1$-$C_{12}$- und insbesondere Methoxygruppe, oder $-O(CH_2CH_2O)_nCH_3$ mit n = 1 bis 4, vorzugsweise 1 oder 2.

$R^2$ ist vorzugsweise ein Wasserstoffatom, eine $C_1$-$C_{12}$-Alkylgruppe, vorzugsweise Methylgruppe, eine $C_1$-$C_{30}$-, vorzugsweise $C_1$-$C_{12}$-Alkoxygruppe, insbesondere Methoxygruppe, oder $-O(CH_2CH_2O)_nCH_3$ mit n = 1 bis 4, vorzugsweise 1 oder 2.

$R^1$ und $R^2$ können auoh zusammen den Rest $-O(CH_2)_mCH_2-$ oder $-O(CH_2)_mO-$ mit m = 1 bis 12, vorzugsweise 1 bis 4, bilden.

Beispiele für Verbindungen der Formel (I) sind 3-Methoxythiophen, 3-Methoxy-4-methylthiophen, 3,4-Dimethoxythiophen, 3-Ethoxythiophen, 3-Ethoxy-4-methylthiophen, 3-Ethoxy-4-methoxythiophen, 3-Propoxythiophen, 3-Butoxythiophen, 3-Butoxy-4-methylthiophen, 3-Butoxy-4-methoxythiophen, 3-Pentyloxythiophen, 3-Hexyloxythiophen, 3-Heptyloxythiophen, 3-Octyloxythiophen, 3-Nonyloxythiophen, 3-Docyloxythiophen, 3-Undecyloxythiophen, 3-Dodecyloxythiophen, 3-Tetradecyloxythiophen, 3-Pentadecyloxythiophen, 3-Hexadecyloxythiophen, 3-Octadecyloxythiophen, 3-Eicosyloxythiophen, 3-Docosyloxythiophen, 3-(2′-Ethylhexyloxy)thiophen, 3-(2′,4′,4′-Trimethylpentyloxy)thiophen, 3,4-Dihexyloxythiophen, 3,4-Dioctyloxythiophen, 3,4-Dinonyloxythiophen, 3,4-Didodecyloxythiophen, 3-Methoxy-4-pentyloxythiophen, 3-Hexyloxy-4-methoxythiophen, 3-Methoxy-4-nonyloxythiophen, 3-Dodecyloxy-4-methoxythiophen, 3-Dodecyloxy-4-methylthiophen, 3-Docosyloxy-4-methoxythiophen, 3-Ethoxy-4-pentyloxythiophen, 3-Ethoxy-4-hexyloxythiophen, 3-Butoxy-4-dodecyloxythiophen, 3-(2′-Ethylhexyloxy)-4-methoxythiophen, 3-(Methoxyethoxy)thiophen, 3-(Methoxyethoxy)-4-methylthiophen, 3-(Methoxyethoxyethoxy)thiophen, 3-(Methoxyethoxyethoxy)-4-methylthiophen, 3-Ethyl-4-methoxythiophen, 3-Butyl-4-methoxythiophen, 3-Dodecyl-4-methoxythiophen, 3-Ethoxy-4-ethylthiophen, 3-Butoxy-4-ethylthiophen, 3,4-(Ethylen-1,2-dioxy)thiophen, 3,4-(Prop-3-ylen-1-oxy)thiophen. Auch Gemische von Verbindungen der Formel (I) können eingesetzt werden.

Das erfindungsgemäße Verfahren beschreibt auch die vorteilhafte Herstellung von dotierten Poly(alkoxythiophenen) durch elektrochemische Polymerisation von Verbindungen der Formel (II)

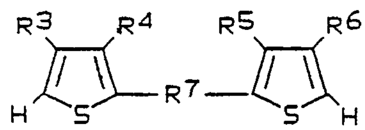

(II)

in Gegenwart eines Elektrolyt-Lösemittels, eines Leitsalzes und einer Brönsted-Säure.

Wenigstens einer der Reste $R^3$, R4, $R^5$ oder $R^6$ ist ine geradkettige oder verzweigte $C_1$-$C_{30}$-Alkoxygruppe, vorzugsweise $C_1$-$C_{12}$-Alkoxygruppe, insbesondere Methoxygruppe, oder $-O(CH_2CH_20)_nCH_3$ mit n = 1 bis 4, vorzugsweise 1 oder 2.

Die übrigen der Reste $R^3$, $R^4$, $R^5$, $R^6$ sind vorzugsweise ein Wasserstoffatom, eine $C_1$-$C_{12}$-Alkylgruppe, vorzugsweise Methylgruppe, oder eine $C_1$-$C_{30}$-, vorzugsweise $C_1$-$C_{12}$-Alkoxygruppe.

$R^7$ ist eine Arylengruppe, vorzugsweise Phenylen, eine Heteroarylengruppe, vorzugsweise Thienylen, Furanylen, Pyrrolylen oder ein konjugiertes System der Formel $(CH=CH)_p$, worin p null, 1, 2 oder 3, vorzugsweise null oder eins, bedeutet.

$R^3$, $R^4$, $R^5$, $R^6$ können auch unabhängig voneinander vorzugsweise ein Wasserstoffatom, eine $C_1$-$C_{12}$-Alkylgruppe, vorzugsweise Methylgruppe, oder eine $C_1$-$C_{30}$-, vorzugsweise $C_1$-$C_{12}$-Alkoxygruppe, insbesondere Methoxygruppe darstellen, wenn $R^7$ ein Rest der Formel (III)

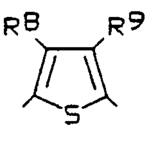

(III)

ist.

$R^8$ ist eine geradkettige oder verzweigte $C_1$-$C_{30}$-, vorzugsweise $C_1$-$C_{12}$-Alkoxygruppe, insbesondere Methoxygruppe, oder $-O(CH_2CH_2O)_nCH_3$ mit n = 1 bis 4, vorzugsweise 1 oder 2.

$R^9$ ist ein Wasserstoffatom, ine $C_1$-$C_{12}$-Alkylgruppe, vorzugsweise Methylgruppe, oder eine $C_1$-$C_{30}$-, vorzugsweise $C_1$-$C_{12}$-Alkoxygruppe, insbesondere Methoxygruppe.

Beispiele für Verbindungen der Formel (II) sind: 3,3′-Dimethoxy-2,2′-bithiophen, 3,4′-Dimethoxy-2,2′-bithiophen, 4,4′-Dimethoxy-2,2′-bithiophen, 3,3′-Dihexyloxy-2,2′-bithiophen, 4,4′-Didodecyloxy-2,2′-bithiophen, 3-Dodecyloxy-4′-methoxy-2,2′-bithiophen, 3,3′-Dimethoxy-4,4′-dimethyl-2,2′-bithiophen, 4,4′-Dimethoxy-3,3′-dimethyl-2,2′-bithiophen, 3′-Methoxy-2,2′;5′,2″-terthienyl, 3′,4′-Dimethoxy-2,2′;5′,2″-terthienyl, 3′-Methoxy-4′-methyl-2,2′;5′,2″-terthienyl, 4,4″-Dimethoxy-2,2′;5′,2″-terthienyl, 3,3″-Dimethoxy-2,2′;5′,2″-terthienyl. Auch Gemische von Verbindungen der Formel (II) oder Gemische aus Verbindungen der Formel (II) mit denen der Formel (I) können eingesetzt werden.

Der Anteil der Verbindungen der Formel (I) oder (II) beträgt in der Regel 60 bis 100 mol-%, vorzugsweise 90 bis 100 mol-%, insbesondere 95 bis 100 mol-%, bezogen auf den Gesamtmonomergehalt des Elektrolyten.

Als Comonomere für die Verbindungen der Formel (I) und der Formel (II) kommen vorzugsweise die Verbindungen der Formeln (IV) und (V) in Frage.

In Formel (IV)

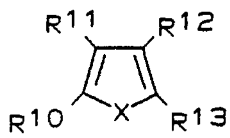

(IV)

sind $R^{11}$ und $R^{12}$ unabhängig voneinander ein Wasserstoffatom, ein Halogenatom, eine $C_1$-$C_{12}$-, vorzugsweise $C_1$-$C_4$-Alkylgruppe, eine Alkoxyalkylgruppe, vorzugsweise Alkoxymethyl, eine Arylmethylgruppe, vorzugsweise Benzyl oder Thienylmethyl, eine Arylgruppe, vorzugsweise Phenyl oder Thienyl, oder bilden zusammen mit den sie verbindenden C-Atomen einen aromatischen Ring, vorzugsweise einen Benzol-, Thiophen- oder Pyrrolring.

$R^{10}$ und $R^{13}$ sind unabhängig voneinander ein Wasserstoffatom oder bilden jeweils mit $R^{11}$ oder $R^{12}$ zusammen mit den sie verbindenden C-Atomen einen aromatischen Ring, vorzugsweise einen Benzol-, Thiophen- oder Pyrrolring.

X bedeutet ein Sauerstoffatom, ein Schwefelatom, eine NH-Gruppe, eine N-Alkylgruppe, vorzugsweise N-C1-C4-Alkyl, oder eine N-Arylgruppe, vorzugsweise N-Phenyl. Geeignet sind Pyrrol, 3-Chlorpyrrol, 3-Methylpyrrol, 3,4-Dimethylpyrrol, N-Methylpyrrol, Thieno[3,2-b]pyrrol, Carbazol, Thiophen, 3-Methylthiophen, 3-Octylthiophen, 3,4-Dimethylthiophen, 3,4-Diethylthiophen, 3-(Methoxyethoxymethyl)thiophen, 3-(Methoxyethoxyethoxymethyl)thiophen, Thieno[2,3-b]thiophen, Dithieno[3,2-b;2′,3′-d]thiophen, Dibenzothiophen und Isothionaphten. Der Anteil dieser Comonomere beträgt in der Regel 0 bis 40 mol-%, vorzugsweise weniger als 10 mol-%., bezogen auf den Gesamtmonomergehalt des Elektrolyten.

Weiterhin können zur Modifizierung der Endgruppen der Poly(alkoxythiophene) Verbindungen mit der Formel (V)

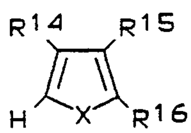

(V)

zu den Verbindungen der Formel (I) oder (II) zugesetzt werden.

$R^{14}$ und $R^{15}$ sind unabhängig voneinander ein Wasserstoffatom, ein Halogenatom, vorzugsweise Chlor oder Brom, eine $C_1$-$C_{12}$-, vorzugsweise $C_1$-$C_4$-Alkylgruppe, eine $C_1$-$C_{30}$-, vorzugsweise $C_1$-$C_{12}$-Alkoxygruppe oder eine $C_1$-$C_4$-Acylaminogruppe, vorzugsweise Acetylamino.

$R^{16}$ ist in Halogenatom, vorzugsweise Chlor oder Brom, eine $C_1$-$C_{12}$-, vorzugsweise $C_1$-$C_4$-Alkylgruppe, eine $C_1$-$C_{30}$-, vorzugsweise $C_1$-$C_{12}$-Alkoxygruppe oder eine $C_1$-$C_4$-Acylaminogruppe, vorzugsweise Acetylamino.

X hat die oben angegebene Bedeutung.

Beispiele für Verbindungen der Formel (IV) sind 2-Bromthiophen, 2-Chlorthiophen, 2-Methylthiophen, 2-Dodecylthiophen, 2-Methoxythiophen, 2-Hexyloxythiophen, 2-Dodecyloxythiophen, 2-Acetylaminothiophen, 2-Brom-3-methoxythiophen, 2-Brom-4-methoxythiophen, 2-Chlor-3-methylthiophen, 2,3-Dimethylthiophen, 2,4-Dimethylthiophen, 2,3-Dimethoxythiophen, 2,4-Dimethoxythiophen, 3-Methoxy-2-methylthiophen, 3-Hexyloxy-2-methylthiophen, 2-Methoxy-3-methylthiophen, 4-Methoxy-2-methylthiophen, 2-Acetylamino-3-methoxythiophen, 2-Acetylamino-4-methoxythiophen, 2,3,4-Trimethylthiophen, 3,4-Dimethyl-2-methoxythiophen, 2,4-Dimethyl-3-methoxythiophen, 3,4-Dimethyl-2-dodecyloxythiophen, 3,4-Dimethoxy-2-methylthiophen, 2,3,4-Trimethoxythiophen, 2-Brompyrrol, 2-Chlorpyrrol, 2-Chlor-3-methylpyrrol, 2-Brom-3,4-dimethylpyrrol, 2-Methylfuran,2-Methoxyfuran, 2,3,4-Trimethylfuran, Aufgrund der Substitution in der 2-Stellung wirken die Verbindungen der Formel (IV) kettenabbrechend. Ihr Anteil beträgt in der Regel 0 bis 40 mol-%,

vorzugsweise weniger als 10 mol-%, bezogen auf den Gesamtmonomergehalt des Elektrolyten. Die vorstehenden Comonomeren der Formeln (IV) und (V) können auch als Gemische verwendet werden.

Die Herstellung der Verbindungen der Formel (I), (II), (IV) und (V) ist aus dem Stand der Technik bekannt. Die Monomerkonzentration beträgt 0,01 bis 5 mol, vorzugsweise 0,05 bis 1 mol Monomere pro $dm^3$ Elektrolyt-Lösemittel.

Die elektrochemische Polymerisation der Monomeren bzw. der Monomer-Gemische wird in einem der üblichen Elektrolyt-Lösemittelsysteme durchgeführt, die unter den Bedingungen der elektrochemischen Polymerisation beständig sein und eine ausreichende Löslichkeit für Monomer und Leitsalz aufweisen müssen. Vorzugsweise finden dipolar aprotische Lösemittel wie beispielsweise Acetonitril, Benzonitril, Propylencarbonat, Nitromethan und Schwefeldioxid sowie Gemische dieser Lösemittel, gegebenenfalls auch mit anderen unter den Bedingungen der elektrochemischen Polymerisation stabilen Lösemitteln wie beispielsweise Dimethylformamid, N-Methylpyrrolidinon, Dimethylsulfoxid, Methylenchlorid und Tetrahydrofuran Verwendung.

Als Leitsalze, die dem Ladungstransport während der elektrochemischen Polymerisation dienen und deren Anionen in die Polymeren eingebaut werden und deren Eigenschaften wie Thermostabilität, Löslichkeit und elektrische Leitfähigkeit beeinflussen können, finden die an sich üblichen Verbindungen Verwendung. Genannt seien hier beispielsweise Tetrafluoroborate, Hexafluorophosphate, Hexafluoroarsenate, Hexafluoroantimonate, Hexachloroantimonate, Hydrogensulfate, Perfluoralkylsulfonate, p-Toluolsulfonate, Perchlorate. Bevorzugt sind dabei Tetrafluoroborate, Hexafluorophosphate und Trifluormethansulfonate. Es können auch Gemische dieser Leitsalze verwendet werden.

Als Kationen für die Leitsalze sind neben den Erdalkalimetallkaticnen vorzugsweise die Alkalimetallkationen, insbesondere $Li^+$ und $Na^+$, geeignet. Als geeignet erweisen sich auch Kationen des Typs $R_4N^+$ bzw. $R_4P^+$, worin die Reste R jeweils unabhängig voneinander Wasserstoff, $C_1$-$C_{12}$-Alkylreste, cycloaliphatische oder aromatische Reste bedeuten.

Besonders bevorzugte Leitsalze sind Lithium- und Natriumtetrafluoroborat. Die Menge an Leitsalz beträgt 0,01 mol bis 1 mol, vorzugsweise 0,05 bis 0,5 mol pro $dm^3$ Lösemittel, maximal entspricht sie der Sättigungskonzentration.

Wesentlich für das erfindungsgemäße Verfahren zur elektrochemischen Herstellung von Poly-(alkoxythiophenen) ist die Anwesenheit einer Protonenquelle in Form mindestens einer monomeren oder polymeren anorganischen oder organischen Brönsted-Säure mit einem $pK_s$-Wert von -1,75 bis 5, vorzugsweise -1,75 bis 0, insbesondere -1,74, zusätzlich zum Leitsalz im Elektrolyt-Lösemittel. Bei Säuren, die in reiner Form einen $pK_s$-Wert haben, der kleiner als -1,74 ist, muß eine mindestens äquimolaren Menge einer Brönsted-Base zugesetzt werden, deren konjugate Säure, und damit die aus der Mischung resultierende Brönsted-Säure, einen $pK_s$-Wert von -1,75 bis 5, vorzugsweise -1,75 bis 0, insbesondere -1,74, hat. Bei allen anderen Säuren ist der Zusatz dieser Brönsted-Base nicht erforderlich, jedoch möglich. Die Brönsted-Base ist vorzugsweise Wasser.

Die anorganische Säure stammt vorzugsweise aus der Gruppe der Halogenwasserstoffsäuren, Pseudohalogenwasserstoffsäuren, Säuren der Halogenkomplexe der Elemente der Gruppen 3a, 4a und 5a des Periodensystems der Elemente, Säuren der Oxokomplexe der Elemente der Gruppen 3a, 4a, 5a, 6a und 7a und Säuren der anionischen Komplexe der Übergangsmetalle. Als Beispiele für geeignete anorganische Brönsted-Säuren seien hier genannt: HF, HOCN, HSCN, $HSO_4^-$, $HN_3$, $HNO_3$, $H[Au(CN)]_4$, $H_2CrO_4$, $HMnO_4$, $H_2[NiCl_4]$, $H_2[PtCl_6]$, Molybdatophosphorsäure sowie vorzugsweise Oxoniumsalze in Form wäßriger Lösungen von HCl, $HBF_4$, $HPF_6$, $H_3PO_4$, $HAsF_6$, $HSbF_6$, $H_2SO_4$, $HClO_4$, $HIO_4$. Besonders bevorzugt ist wässrige Tetrafluoroborsäure.

Die organische Säure stammt bevorzugt aus der Gruppe der monomeren oder polymeren Alkylphosphonsäuren, Perfluoralkylphosphonsäuren, Arylphosphonsäuren, Alkylsulfonsäuren, Perfluoralkylsulfonsäuren, Arylsulfonsäuren, Alkylcarbonsäuren, Perfluoralkylcarbonsäuren, Arylcarbonsäuren. Als Beispiele für geeignete organische Brönsted-Säuren seien hier genannt: Methansulfonsäure, Polyvinylsulfonsäure, Polystyrolsulfonsäure, Polystyrol-Polystyrolsulfonsäure-Copolymer, Campher-3-sulfonsäure, Methanphosphonsäure, Essigsäure, Octansäure, Trifluoressigsäure, Perfluoroctansäure, Benzoesäure, saurer Ionenaustauscher sowie vorzugsweise Oxoniumsalze in Form wäßriger Lösungen von Benzolsulfonsäure, Toluolsulfonsäure, Trifluormethansulfonsäure, Perfluoroctansulfonsäure.

Die Menge der anorganischen oder organischen Säure beträgt 0,002 bis 5 mol, vorzugsweise 0,01 bis 1 mol pro $dm^3$ Elektrolyt-Lösemittel, mindestens jedoch 20 val-% der Menge der eingesetzten Monomere. Die Menge der bei Säuren mit einem $pK_s$-Wert kleiner als -1,74 zugesetzten Brönsted-Base beträgt 0,002 bis 5 mol, vorzugsweise 0,01 bis 1 mol pro $dm^3$ Elektrolyt-Lösemittel, mindestens jedoch die zur Säure äquivalente Menge. Bei Brönsted-Säuren mit einem $pK_s$-Wert von -1,75 bis 5 kann die Brönsted-Base in einer Menge bis zu 5 mol, vorzugsweise bis zu 1 mol, insbesondere bis zu 0,2 mol pro $dm^3$ Elektrolyt-

Lösemittel, zugesetzt werden.

Die Anode besteht aus einem der üblichen unter den Bedingungen der anodischen Polymerisation beständigen Materialien, vorzugsweise aus einem Edelmetall, insbesondere Platin und Gold, oder Kohlenstoff, insbesondere aus glasartigem Kohlenstoff (Pyrolysekohlenstoff). Sie kann in Form von Platten, Blechen oder Zylindern eingesetzt werden und wird im allgemeinen parallel zur Kathode angeordnet. Bei Verwendung von zwei Anoden befinden sich diese in gleichem Abstand vor und hinter der Kathode Eine Variante besteht darin, eine Elektrodenform zu wählen, die eine große spezifische Oberfläche mit vielen Hohlräumen bietet, beispielsweise netz-, gewebe- und filzartige Formen aus Fasern aus Edelmetall oder Kohlenstoff. Geeignete Anoden sind beispielsweise Hart- und Weichfilze sowie ein- und mehrlagige Gewebe aus Kohlenstoff-Fasern.

Die Kathode besteht aus einem der üblichen Elektroden-Materialien wie z.B. Platin, Gold, Nickel, Kupfer, Silber, Graphit oder Glaskohlenstoff, vorzugsweise aus Edelstahl. Sie kann in Form von Platten, Blechen oder Netzen eingesetzt werden und wird im allgemeinen parallel zur Anode angeordnet. Bei Verwendung von zwei Kathoden befinden sich diese in gleichem Abstand vor und hinter der Anode. Um einen Kurzschluß zu verhindern kann die Kathode über einen Abstandshalter, der z.B. aus einem inerten Kunststoffnetz besteht, von der Anode getrennt werden.

Die elektrochemische Polymerisation wird bei einer Temperatur durchgeführt, die zwischen der Erstarrungstemperatur und der Siedetemperatur des Elektrolyt-Lösemittelsystems und zumeist im Bereich von -60 bis 80 °C, vorzugsweise -30 bis 50 °C liegt. Die größten Ausbeuten werden im allgemeinen bei einer Temperatur von -20 bis 40 °C erreicht.

Die Dauer der Elektrolyse hängt ab von dem verwendeten Elektrolyt-System, den jeweiligen Elektrolyse-Bedingungen und insbesondere der eingesetzten Menge der Monomeren. Üblicherweise beträgt die Elektrolysedauer 1 bis 12 Stunden, vorzugsweise 2 bis 8 Stunden.

Die elektrochemische Polymerisation kann in den üblichen Zellen oder Elektrolyse-Apparaturen durchgeführt werden. Gut geeignet sind beispielsweise einfache Elektrolyse-Apparaturen, bestehend aus einer ungeteilten Zelle, zwei oder mehr Elektroden und einer externen Strom-Spannungsquelle. Es können aber auch geteilte Zellen mit Diaphragmen oder Ionenaustauschermembranen oder solche mit Referenzelektroden zur exakten Potentialbestimmung eingesetzt werden. Die Messung des Stromverbrauchs ist zweckmäßig, da dies eine Abschätzung der bereits verbrauchten Monomermenge ermöglicht. Eine Elektrolyse-Apparatur, bei der die Kathode flächig am Boden ausgebildet ist und die Anode in Form eines Bandes mit konstantem Vorschub durch den Elektrolyt geführt wird, ermöglicht eine kontinuierliche Verfahrensführung.

Als Strom-Spannungsquelle für den Betrieb der elektrolytischen Zelle, in der das erfindungsgemäße Verfahren durchgeführt wird, eignet sich jede Gleichstrom-Spannungsquelle, die eine hinreichend hohe elektrische Spannung liefert. Üblicherweise wird die elektrochemische Polymerisation mit einer Spannung von 0,1 bis 100 Volt, vorzugsweise im Bereich von 1,5 bis 30 Volt betrieben. Für die Stromdichte haben sich Werte im Bereich von 0,0002 bis 50 $mA/cm^2$, vorzugsweise im Bereich von 0.001 bis 10 $mA/cm^2$ spezifischer Anodenoberfläche als günstig und vorteilhaft erwiesen.

Im Gegensatz zu den Elektrolysen ohne Säurezusatz (Vergleichsbeispiel A) wird auch bei Verwendung der bevorzugten Alkalitetrafluoroborate als Leitsalz die Bildung von Kathodenbelägen durch den erfindungsgemäßen Zusatz einer Carbonsäure verhindert oder zumindest verringert und der Anstieg der Klemmenspannung während der Elektrolyse unter konstantem Strom deutlich reduziert.

Zur Isolierung und Reinigung werden die Poly(alkoxythiophene) mechanisch von der Anode oder durch Filtration aus dem Elektrolyten abgetrennt. Lösliche Poly(alkoxythiophene) können auch mit einem geeigneten Lösemittel von der Anode abgelöst und nach Verdampfen des Lösemittels erhalten werden. Die weitere Reinigung der Rohprodukte und die Entfernung von Leitsalzen, Monomeren und anderen anhaftenden Verunreinigungen erfolgt durch Waschen mit Lösemitteln, in denen die Polymere unlöslich sind, wie Wasser, Methanol, Ethanol, Petrolether, Pentan, Cyclohexan und gegebenenfalls Acetonitril oder Dichlormethan. Nach dem erfindungsgemäßen Verfahren sind Ausbeuten von etwa 50 bis 80% möglich.

Da als bevorzugte Kathodenreaktion die Wasserstoffentwicklung durch die Zugabe der Brönsted-Säure auch bei hohen Umsätzen gewährleistet ist, findet kein nennenswerter kathodischer Abbau von Leitsalz und Lösemittel statt. Daher kann das Elektrolyt-Lösemittel, der Überschuß der Brönsted-Säure und der nicht in das leitende Polymer eingebaute Überschuß des Leitsalzes aus dem Elektrolyten zurückgewonnen und erneut eingesetzt werden.

Die Erfindung wird durch die nachfolgenden Beispiele näher erläutert. Die in den Beispielen angegebenen Prozente beziehen sich, sofern nicht anders vermerkt, auf das Gewicht. Die spezifische Leitfähigkeit wurde mittels Vierpunktmessung an Preßlingen bestimmt. Die Molekulargewichtsverteilung der löslichen Polymere wurde an der neutralen (undotierten) Form, die beispielsweise durch elektrochemische Reduktion an einer Platin-Kathode bei -0,3 V, bezogen auf eine wäßrige Ag/AgCl-Referenzelektrode, erhalten wurde,

mittels Gelpermeationschromatographie (GPC) bestimmt.

### Vergleichsbeispiel A

11,0 g Natriumtetrafluoroborat, 22,8 g 3-Methoxythiophen und 1200 g Acetonitril wurden in eine trogförmige, ungeteilte Elektrolysezelle gegeben. In der Mitte der Zelle war eine wassergekühlte Hohlkathode aus Edelstahl von 170 mm Länge und 170 mm Breite angeordnet. Zu beiden Seiten im Abstand von 2 cm parallel zur Kathode befand sich jeweils eine Anode aus Kohlenstoff-Filz (Flächengewicht 0,4 $kg/m^2$, spez. Oberfläche (BET) ca. 1,5 $m^2/g$) von 170 mm Länge, 170 mm Breite und 4 mm Dicke. Zwischen der Kathode und den Anoden befand sich jeweils ein Polypropylen-Netz als Abstandshalter. Bei einer Elektrolysetemperatur von 20 °C und einem Anodenstrom von 2A stieg die Zellenspannung während der Elektrolyse schnell von 6,2 Volt bis auf über 30 Volt infolge der Bildung eines Kathodenbelags, so daß die Elektrolyse dreimal unterbrochen und die Kathode gereinigt werden mußte. Nach Verbrauch der theoretischen Strommenge wurde die Elektrolyse beendet. Die mit dem Rohprodukt beladenen Anoden wurden nach dem Trocknen in ein Bad mit Acetonitril gestellt und dort mehrfach solange digeriert, bis die Polymeren praktisch vollständig in Lösung gegangen waren. Die Lösung wurde über einen Glasfiltertiegel der Porengröße G3 filtriert und das Filtrat im Rotationsverdampfer zur Trockene eingeengt. Das Rohprodukt wurde mechanisch zerkleinert, mit Wasser gewaschen, getrocknet, mit Dichlormethan digeriert, anschließend abfiltriert und getrocknet. Es wurden 6,8 g eines bronzemetallisch glänzenden Feststoffs erhalten. Ein Pulverpreßling des gemahlenen Produkts besaß eine spezifische Leitfähigkeit von $4{,}4 \cdot 10^{-3}$ S/cm. Die GPC der undotierten Form ergab, daß mehr als 90% des Produkts aus Pentameren und Hexameren bestand.

### Beispiel 1

11,0 g Natriumtetrafluoroborat, 17,6 g einer 50 prozentigen wäßrigen Tetrafluoroborsäure, 22,8 g 3-Methoxythiophen und 1200 g Acetonitril wurden in einer Elektrolysezelle gemäß Vergleichsbeispiel A elektrolysiert. Bei einer Elektrolysetemperatur von 20 °C und einem Anodenstrom von 2 A betrug die Zellenspannung zu Beginn der Elektrolyse 5,9 Volt und gegen Ende der Elektrolyse 11,8 Volt, ohne daß die Kathode gereinigt werden mußte. Nach Verbrauch der theoretischen Strommenge wurde die Elektrolyse beendet. Die Aufarbeitung erfolgte gemäß Vergleichsbeispiel A. Es wurden 10,4 g eines bronzemetallisch glänzenden Feststoffs erhalten. Ein Pulverpreßling des gemahlenen Produkts besaß eine spezifische Leitfähigkeit von $3{,}1 \cdot 10^{-3}$ S/cm. Die GPC der undotierten Form ergab, daß mehr als 90% des Produkts aus Pentameren und Hexameren bestand.

### Beispiel 2

22,0 g Natriumtetrafluoroborat, 48,6 g einer 60prozentigen wäßrigen Hexafluorophosphorsäure, 45,6 g 3-Methoxythiophen und 2500 g Acetonitril wurden in eine trogförmige, ungeteilte Elektrolysezelle gegeben. In der Mitte der Zelle war eine Trennwand aus Polyethylen. In beiden Zellenteilen war in der Mitte eine Kathode aus Edelstahl von 170 mm Länge und 170 mm Breite angeordnet. Zu beiden Seiten im Abstand von 2 cm parallel zur Kathode befand sich jeweils eine Anode aus Kohlenstoff-Filz (Flächengewicht 0,4 $kg/m^2$, spez. Oberfläche (BET) ca. 1,5 $m^2/g$) von 170 mm Länge, 170 mm Breite und 4 mm Dicke. Zwischen der Kathode und den Anoden befand sich jeweils ein Polypropylen-Netz als Abstandshalter. Bei einer Elektrolysetemperatur von 20 °C und einem Anodenstrom von 4 A betrug die Zellenspannung zu Beginn der Elektrolyse 3,0 Volt und gegen Ende der Elektrolyse 10,5 Volt, ohne daß die Kathode gereinigt werden mußte. Nach Verbrauch der theoretischen Strommenge wurde die Elektrolyse beendet. Die Aufarbeitung erfolgte gemäß Vergleichsbeispiel A. Es wurden 10,6 g eines bronzemetallisch glänzenden Feststoffs erhalten. Ein Pulverpreßling des gemahlenen Produkts besaß eine spezifische Leitfähigkeit von $1{,}4 \cdot 10^{-3}$ S/cm.

### Beispiel 3

22,0 g Natriumtetrafluoroborat, 38,0 g p-Toluolsulfonsäuremonohydrat, 45,6 g 3-Methoxythiophen und 2500 g Acetonitril wurden in einer Elektrolysezelle gemäß Vergleichsbeispiel A elektrolysiert. Bei einer

Elektrolysetemperatur von 20° C und einem Anodenstrom von 4A betrug die Zellenspannung zu Beginn der Elektrolyse 4,5 Volt und gegen Ende der Elektrolyse 13,5 Volt, ohne daß die Kathode gereinigt werden mußte. Nach Verbrauch der theoretischen Strommenge wurde die Elektrolyse beendet. Die Aufarbeitung erfolgte gemäß Vergleichsbeispiel A. Es wurden 11,5 g eines bronzemetallisch glänzenden Feststoffs erhalten. Ein Pulverpreßling des gemahlenen Produkts besaß eine spezifische Leitfähigkeit von $9{,}2 \cdot 10^{-4}$ S/cm.

**Beispiel 4**

11,0 g Natriumtetrafluoroborat, 17,6 g einer 50 prozentigen wäßrigen Tetrafluoroborsäure, 25,6 g 3-Ethoxythiophen und 1200 g Acetonitril wurden in einer Elektrolysezelle gemäß Vergleichsbeispiel A elektrolysiert. Bei einer Elektrolysetemperatur von 20° C und einem Anodenstrom von 2A betrug die Zellenspannung zu Beginn der Elektrolyse 5,3 Volt und gegen Ende der Elektrolyse 6,2 Volt, ohne daß die Kathode gereinigt werden mußte. Nach Verbrauch der theoretischen Strommenge wurde die Elektrolyse beendet. Die Aufarbeitung erfolgte gemäß Vergleichsbeispiel A. Es wurden 5,0 g eines bronzemetallisch glänzenden Feststoffs erhalten. Ein Pulverpreßling des gemahlenen Produkts besaß eine spezifische Leitfähigkeit von $1{,}3 \cdot 10^{-2}$ S/cm. Die GPC der undotierten Form ergab, daß mehr als 80% des Produkts aus Hexameren bestand.

**Beispiel 5**

11,0 g Natriumtetrafluoroborat, 17,6 g einer 50prozentigen wäßrigen Tetrafluoroborsäure, 18,2 g 3-Methoxythiophen, 6,2 g 3-Butoxythiophen und 1200 g Acetonitril wurden in einer Elektrolysezelle gemäß Vergleichsbeispiel A elektrolysiert. Bei einer Elektrolysetemperatur von 20° C und einem Anodenstrom von 2A betrug die Zellenspannung zu Beginn der Elektrolyse 6,0 Volt und gegen Ende der Elektrolyse 7,6 Volt, ohne daß die Kathode gereinigt werden mußte. Nach Verbrauch der theoretischen Strommenge wurde die Elektrolyse beendet. Die Aufarbeitung erfolgte gemäß Vergleichsbeispiel A. Es wurden 3,8 g eines bronzemetallisch glänzenden Feststoffs erhalten. Ein Pulverpreßling des gemahlenen Produkts besaß eine spezifische Leitfähigkeit von $3{,}1 \cdot 10^{-2}$ S/cm.

**Vergleichsbeispiel B**

11,0 Teile Natriumtetrafluoroborat, 26,8 Teile 3-Dodecyloxythiophen und 1200 Teile Acetonitril wurden in eine trogförmige, ungeteilte Elektrolysezelle gegeben. In der Mitte der Zelle war eine wassergekühlte Hohlkathode aus V2A-Stahl von 170 mm Länge und 170 mm Breite angeordnet. Zu beiden Seiten im Abstand von 2 cm parallel zur Kathode befand sich jeweils eine Anode von 170 mm Länge und 170 mm Breite aus einem 8 lagigen Netz aus Platin/Rhodium (95:5)-Draht von 0,07 mm Durchmesser. Zwischen der Kathode und den Anoden befand sich jeweils ein Polypropylen-Netz als Abstandshalter. Bei einer Elektrolysetemperatur von 20° C und einem Anodenstrom von 1 A stieg die Zellenspannung während der Elektrolyse von 13 Volt bis auf über 70 Volt infolge der Bildung eines Kathodenbelags, so daß die Elektrolyse unterbrochen und die Kathode gereinigt werden mußte. Nach Verbrauch der theoretischen Strommenge wurde die Elektrolyse beendet. Die mit dem Rohprodukt beladenen Anoden wurden nach dem Trocknen in ein Bad mit Dichlormethan gestellt und dort mehrfach solange digeriert, bis die Polymere praktisch vollständig in Lösung gegangen waren. Die Lösung wurde über einen Glasfiltertiegel der Porengröße G3 filtriert und das Filtrat im Rotationsverdampfer zur Trockene eingeengt. Das Rohprodukt wurde mechanisch zerkleinert, mit Acetonitril- und Hexan digeriert, anschließend abfiltriert und bei 100° C in Ölpumpenvakuum getrocknet. Es wurden 6,6 Teile eines blauschwarz glänzenden Feststoffs erhalten. Ein Pulverpreßling des gemahlenen Produkts besaß eine spezifische Leitfähigkeit von $7{,}4 \cdot 10^{-3}$ S/cm. Die GPC der undotierten Form ergab eine mittlere Molmasse von ca. 5400.

**Beispiel 6**

11,0 Teile Natriumtetrafluoroborat, 17,6 Teile 50 Gew.-%ige wäßrige Tetrafluoroborsäure, 26,8 Teile 3-Dodecyloxythiophen und 1200 Teile Acetonitril wurden in einer Elektrolysezelle gemäß Vergleichsbeispiel B

elektrolysiert. Bei einer Elektrolysetemperatur von 20 °C und einem Anodenstrom von 1 A betrug die Zellenspannung zu Beginn der Elektrolyse 2,5 Volt und gegen Ende der Elektrolyse 6,0 Volt, ohne daß die Kathode gereinigt werden mußte. Nach Verbrauch der theoretischen Strommenge wurde die Elektrolyse beendet. Die Aufarbeitung erfolgte gemäß Vergleichsbeispiel B. Es wurden 5,9 Teile eines blauschwarz glänzenden Feststoffs erhalten. Ein Pulververpreßling des gemahlenen Produkts besaß eine spezifische Leitfähigkeit von $4{,}8 \cdot 10^{-3}$ S/cm. Die GPC der undotierten Form ergab eine mittlere Molmasse von ca. 5400.

**Beispiel 7**

11,0 Teile Natriumtetrafluoroborat, 24,3 Teile 60 %ige wäßrige Hexafluorophosphorsäure, 26,8 Teile 3-Dodecyloxythiophen und 1200 Teile Acetonitril wurden in einer Elektrolysezelle gemäß Vergleichsbeispiel B elektrolysiert. Bei einer Elektrolysetemperatur von 20 °C und einem Anodenstrom von 1 A betrug die Zellenspannung zu Beginn der Elektrolyse 3,0 Volt und gegen Ende der Elektrolyse 9,0 Volt, ohne daß die Kathode gereinigt werden mußte. Nach Verbrauch der theoretischen Strommenge wurde die Elektrolyse beendet. Die Aufarbeitung erfolgte gemäß Vergleichsbeispiel B. Es wurden 8,0 Teile eines blauschwarz glänzenden Feststoffes erhalten. Ein Pulverpreßling des gemahlenen Produkts besaß eine spezifische Leitfähigkeit von $2{,}5 \cdot 10^{-3}$ S/cm).

**Beispiel 8**

22,0 g Natriumtetrafluoroborat, 12,0 g Trifluormethansulfonsäure, 1,44 g Wasser, 45,6 g 3-Methoxythiophen und 2500 g Acetonitril wurden in einer Elektrolysezelle gemäß Vergleichsbeispiel A elektrolysiert. Bei einer Elektrolysetemperatur von 20 °C und einem Anodenstrom von 4A betrug die Zellenspannung zu Beginn der Elektrolyse 5,0 Volt und gegen Ende der Elektrolyse 21,5 Volt, ohne daß die Kathode gereinigt werden mußte Die Elektrolyse wurde beendet. Die Aufarbeitung erfolgte gemäß Vergleichsbeispiel A. Es wurden 18,3 g eines bronzemetallisch glänzenden Feststoffs erhalten. Ein Pulverpreßling des gemahlenen Produkts besaß eine spezifische Leitfähigkeit von $3{,}9 \cdot 10^{-3}$ S/cm.

**Ansprüche**

1. Verfahren zur Herstellung eines elektrisch leitenden Poly(alkoxythiophens) in der dotierten (oxidierten) Form durch elektrochemische anodische Polymerisation von Verbindungen der Formel (I)

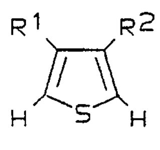

(I),

worin
$R^1$ eine geradkettige oder verzweigte $C_1$-$C_{30}$-Alkoxygruppe oder $-O(CH_2CH_2O)_nCH_3$ mit n = 1 bis 4 und
$R^2$ ein Wasserstoffatom, eine $C_1$-$C_{12}$-Alkylgruppe, eine $C_1$-$C_{30}$-Alkoxygruppe oder $-O(CH_2CH_2O)_nCH_3$ mit n = 1 bis 4 darstellen, oder
$R^1$ und $R^2$ zusammen den Rest $-O(CH_2)_mCH_2-$ oder $-O(CH_2)_mO-$ mit m = 1 bis 12 bilden,
oder Verbindungen der Formel (II)

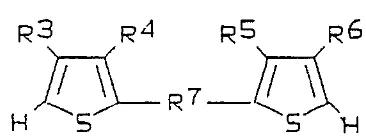

(II),

worin

wenigstens einer der Reste $R^3$, $R^4$, $R^5$ oder $R^6$ eine geradkettige oder verzweigte $C_1$-$C_{30}$-Alkoxygruppe oder $-O(CH_2CH_2O)_nCH_3$ mit n = 1 bis 4 darstellt und die übrigen der Reste $R^3$, $R^4$, $R^5$, $R^6$ ein Wasserstoffatom, eine $C_1$-$C_{12}$-Alkylgruppe oder eine $C_1$-$C_{30}$-Alkoxygruppe darstellen und

$R^7$ eine Arylengruppe, eine Heteroarylengruppe oder ein konjugiertes System der Formel $(CH=CH)_p$, worin p null, 1, 2 oder 3 ist, bedeuten oder

$R^3$, $R^4$, $R^5$, $R^6$ unabhängig voneinander ein Wasserstoffatom, eine $C_1$-$C_1$-Alkylgruppe oder eine $C_1$-$C_{30}$-Alkoxygruppe darstellen und

$R^7$ einen Rest der Formel (III) darstellt

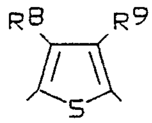

(III),

worin

$R^8$ eine geradkettige oder verzweigte $C_1$-$C_{30}$-Alkoxygruppe oder $-O(CH_2CH_2O)_nCH_3$ mit n = 1 bis 4 und

$R^9$ ein Wasserstoffatom, eine $C_1$-$C_{12}$-Alkylgruppe oder eine $C_1$-$C_{30}$-Alkoxygruppe darstellen,

gegebenenfalls zusammen mit einem oder mehreren Comonomeren der Formel (IV)

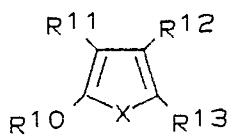

(IV),

worin

$R^{11}$ und $R^{12}$ unabhängig voneinander ein Wasserstoffatom, ein Halogenatom, eine $C_1$-$C_{12}$-Alkyl-, Alkoxyalkyl-, Arylmethyl- oder Arylgruppe bedeuten oder zusammen mit den sie verbindenden C-Atomen einen aromatischen Ring bilden,

$R^{10}$ und $R^{13}$ unabhängig voneinander ein Wasserstoffatom bedeuten oder $R^{10}$ zusammen mit $R^{11}$ und den sie verbindenden C-Atomen oder $R^{12}$ zusammen mit $R^{13}$ und den sie verbindenden C-Atomen jeweils einen aromatischen Ring bilden,

X ein Sauerstoffatom, ein Schwefelatom, eine NH-Gruppe, eine N-Alkylgruppe oder eine N-Arylgruppe bedeutet, oder zusammen mit einem Comonomeren der Formel V

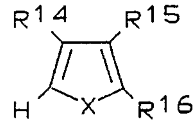

(V),

worin

$R^{14}$ und $R^{15}$ unabhängig voneinander ein Wasserstoffatom, ein Halogenatom, eine $C_1$-$C_{12}$-Alkylgruppe, eine $C_1$-$C_{30}$-Alkoxygruppe oder eine $C_1$-$C_4$-Acylaminogruppe,

$R^{16}$ ein Halogenatom, eine $C_1$-$C_{12}$-Alkylgruppe, eine $C_1$-$C_{30}$-Alkoxygruppe oder eine $C_1$-$C_4$-Acylaminogruppe bedeuten und

X die oben angegebene Bedeutung hat,

in einem Elektrolyt-Lösemittel in Gegenwart eines Leitsalzes und zusätzlich in Gegenwart einer Protonenquelle in Form von mindestens einer monomeren oder polymeren anorganischen oder organischen Brönsted-Säure mit einem $pK_s$-Wert von -1,75 bis 5 oder einer Brönsted-Säure mit einem $pK_s$-Wert kleiner als -1,74 zusammen mit einer mindestens äquivalente Menge einer Brönsted-Base, deren konjugate Säure einen $pK_s$-Wert von - 1,75 bis 5 hat.

2. Verfahren nach Anspruch 1, dadurch gekennzeichnet, daß als Protonenquelle eine anorganische oder organische Brönsted-Säure mit einem $pK_s$-Wert von -1,75 bis 0 eingesetzt wird.

3. Verfahren nach Anspruch 1, dadurch gekennzeichnet, daß als Protonenquelle eine Brönsted-Säure mit

einem $pK_s$-Wert kleiner als - 1,74 zusammen mit einer mindestens äquivalenten Menge einer Brönsted-Base eingesetzt wird, deren konjugate Säure einen $pK_s$-Wert von -1,75 bis 0 hat.

4. Verfahren nach Anspruch 1, dadurch gekennzeichnet, daß eine Brönsted-Säure mit einem $pK_s$-Wert von -1,75 bis 5 zusammen mit einer Brönsted-Base, deren konjugate Säure einen $pK_s$-Wert von -1,75 bis 5 hat, in einer Menge bis zu 5 mol pro $dm^3$ Elektrolyt-Lösemittel eingesetzt wird.

5. Verfahren nach Anspruch 1, dadurch gekennzeichnet, daß eine Brönsted-Säure, die einen $pK_s$-Wert kleiner als 0 hat, zusammen mit einer mindestens äquivalenten Menge Wasser eingesetzt wird.

6. Verfahren nach Anspruch 1, dadurch gekennzeichnet, daß als Protonenquelle eine Brönsted-Säure eingesetzt wird, deren Anionen den Anionen aus dem verwendeten Leitsalz entspechen.

7. Verfahren nach Anspruch 1, dadurch gekennzeichnet, daß als Monomer eine Verbindung der oben genannten Formel (I) in einer Menge von 0,01 bis 5 mol pro $dm^3$ Elektrolyt-Lösemittel, als Elektrolyt-Lösemittel Acetonitril, als Leitsalz ein Alkali-, Erdalkali- oder Tetraalkylammoniumtetrafluoroborat, -hexafluorophosphat oder -trifluormethansulfonat in einer Konzentration von 0,01 bis 1 mol pro $dm^3$ Elektrolyt-Lösemittel, maximal jedoch bis zur Sättigungskonzentration, als Brönsted-Säure entsprechend dem Leitsalz Tetrafluoroborsäure, Hexafluorophosporsäure oder Trifluormethansulfonsäure in einer Konzentration von 0,002 bis 5 mol pro $dm^3$ Elektrolyt-Lösemittel, mindestens jedoch in einer Menge von 20 val-% der Menge der eingesetzten Monomere, und als Brönsted-Base Wasser in einer Konzentration von 0,002 bis 5 mol pro $dm^3$ Elektrolyt-Lösemittel, mindestens jedoch in einer zur Brönsted-Säure äquivalenten Menge, eingesetzt werden.

8. Verfahren nach Anspruch 1, dadurch gekennzeichnet, daß in der oben genannten Formel (I) $R^1$ eine $C_1$-$C_{22}$-Alkoxygruppe und $R^2$ ein Wasserstoffatom ist.

9. Verfahren nach Anspruch 1, dadurch gekennzeichnet, daß als Monomer 3-Methoxythiophen in einer Konzentration von 0,1 bis 1 mol pro $dm^3$ Elektrolyt-Lösemittel, als Elektrolyt-Lösemittel Acetonitril, als Leitsalz Lithiumtetrafluoroborat oder Natriumtetrafluoroborat in einer Konzentration von 0,05 bis 0,5 mol pro $dm^3$ Elektrolyt-Lösemittel, maximal jedoch bis zur Sättigungskonzentration, als Brönsted-Säure Tetrafluoroborsäure in einer Konzentration von 0,01 bis 1 mol pro $dm^3$ Elektrolyt-Lösemittel, mindestens jedoch in einer Menge von 20 val-% der Menge der eingesetzten Monomere, und als Brönsted-Base Wasser in einer Menge von 0,01 bis 1 mol pro $dm^3$ Elektrolyt-Lösemittel, mindestens jedoch in einer zur Brönsted-Säure äquivalenten Menge, bei einer Elektrolysetemperatur von -20 bis 40 °C eingesetzt werden.